(19) **Europäisches Patentamt European Patent Office Office européen des brevets**

(11) **EP 2 126 651 B1**

(12) **EUROPEAN PATENT SPECIFICATION**

(45) Date of publication and mention
of the grant of the patent:
**31.08.2011 Bulletin 2011/35**

(51) Int Cl.:
***G05D 1/02*** *(2006.01)*    ***G01S 17/36*** *(2006.01)*
***A01K 1/01*** *(2006.01)*

(21) Application number: **08723832.5**

(22) Date of filing: **27.02.2008**

(86) International application number:
**PCT/NL2008/000060**

(87) International publication number:
**WO 2008/118006 (02.10.2008 Gazette 2008/40)**

(54) **UNMANNED VEHICLE FOR DISPLACING DUNG**

UNBEMANNTES FAHRZEUG ZUR DÜNGERVERTEILUNG

VÉHICULE SANS CONDUCTEUR DESTINÉ AU DÉPLACEMENT DE DÉJECTIONS ANIMALES

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **26.03.2007 NL 1033591**

(43) Date of publication of application:
**02.12.2009 Bulletin 2009/49**

(73) Proprietor: **Maasland N.V.**
**3147 PA Maassluis (NL)**

(72) Inventor: **VAN DEN BERG, Karel**
**NL-2971 VB Bleskensgraaf (NL)**

(74) Representative: **Jennen, Peter Leonardus**
**Hendricus et al**
**Octrooibureau van der Lely N.V.**
**Weverskade 110**
**3147 PA Maassluis (NL)**

(56) References cited:
**EP-A- 1 690 450**    **EP-A- 1 762 862**
**WO-A- 00/70935**    **WO-A- 00/70941**
**JP-A- 2002 090 454**    **NL-C- 1 024 522**

## Description

The invention relates to an unmanned vehicle according to the preamble of claim 1.

Such an unmanned vehicle is described, for example, in NL-C-1008612, and comprises there a cleaning slide, wheels, and not further defined position determining means on the basis of, for example, laser or infrared means.

WO/70941 describes an unmanned vehicle to be used in a stable, the vehicle is provided with detection means which comprise an animal identification system and/or a radar and/or a camera. The document further describes that the vehicle includes navigation means.

NL1024522 describes an unmanned vehicle specifically a teat cup carrier designed to be able to co-operate with a feed platform, which teat cup carrier is freely movable relative to the feed platform. The document further describes that the vehicle includes navigation means including position-determining , a proximity detector and means for determining the position of the teat cup carrier and for supplying position information. The proximity detector is connectable to the navigation means in order to make it possible for the teat cup carrier to navigate around an obstacle.

EP1762862 describes a method and device for 3D imaging of an actively illuminated target region comprises emitting intensity-modulated light at a variable modulation frequency into the target region. The emitted light is scattered/reflected in the target region depending on the optical properties of the objects or beings present therein. A scattered and/or reflected fraction of the light is detected during an integration time interval by phase-sensitive integration in each pixel of an imaging sensor. The modulation phase between the emitted and the detected light is determined and spatially resolved. Distance information is calculated based on the spatially resolved modulation phase and an average frequency of the modulation frequency.

Although this unmanned vehicle functions properly, it has been found that the efficiency when displacing, for example, dung from sheds is often not satisfactory.

It is an object of the invention to obviate the above-mentioned drawback at least partly.

For this purpose, according to the invention, an unmanned vehicle of the above-described type comprises the features of the characterizing part of claim 1. A vehicle with such a sensor has the advantage that It is capable of distinguishing between an amount of dung or the like and a similar smudge, for example after displacing dung. The advantage is that the vehicle has the possibility of establishing in a more reliable manner whether dung or the like which should be displaced is actually present. As a result thereof, it is possible to displace dung in a more reliable and completer manner from the floor of a shed.

According to the invention, the vehicle comprises a frame, with disposed thereon material displacing means, in particular dung displacing means, propelling means and navigation means connected to the propelling means with a sensor for forming an image of an observation area, the sensor comprising a source of radiation for emitting modulated electromagnetic radiation, in particular light, a receiver device for receiving electromagnetic radiation reflected by an object in the observation area, an optical device for displaying the reflected electromagnetic radiation on the receiver device, and sensor image processing means, wherein the receiver device comprises a matrix with a plurality of rows and a plurality of columns of receivers, and the sensor image processing means are arranged to determine for each of the receivers a phase difference between the emitted electromagnetic radiation and the reflected electromagnetic radiation in order to calculate a distance from the receiver to the object. More precisely, the sensor image processing means calculate in this case the distance from the receiver to the part of the observation area displayed on that receiver. For the sake of convenience, the latter distance will be denoted hereinafter by distance from the receiver to an object in that observation area. That object relates advantageously to material to be displaced, such as dung, straw, rests of feed, etc.

By using such a matrix of receivers and by determining for these receivers a distance, like in this case by means of phase shifting of the emitted light, it is possible to obtain per observation a complete spatial image. This spatial image is in fact composed in one go, instead of by scanning. All this will be explained hereinafter in further detail.

Favourable embodiments are defined in the sub-claims.

In one embodiment, the sensor image processing means are arranged to form a three-dimensional image of the observation area, in particular of an object therein. In principle, the series of measured distances will suffice, but it may be advantageous to produce also a three-dimensional image, for example for visual control. In this case, the image formed is transferred to a display screen or the like. In this case, the distance may, for example, be displayed by false colours, or the image may be rotated, etc.

It should be noted that the optical device, i.e. the lens or lenses, is an optical system which casts an image of the observation area on the receivers, and which determines from what direction measurement takes place. There may be selected a wide or narrow angle of view of the observation area. Advantageously, the optical device comprises an adjustable optical device by means of which the angle of view can be selected, such as a zoom optical device.

It should be noted that the sensor is also suitable as an "ordinary" camera, i.e. a 2D camera which is capable of recording grey tone values. In this case, the emitted and reflected radiation is not recorded as a matrix of depth or distance data, but as an image of the observation area. On the basis of this image, and in particular grey tone values, additional information may be obtained. In particular, the sensor image processing means are arranged to recognize an object in a thus produced grey tone values image. An example here is the recognition of dung on sawdust or the like. Dung will in general have a low reflection capacity (be dark), while sawdust is often light coloured. All this may depend on the radiation applied by the sensor.

The sensor image processing means may be arranged to adapt, if an obstacle is detected, the position and/or the speed of the vehicle. For example, if an animal, a child or other moving object is recognized, the speed will be reduced, if desired to zero. In the case of unknown obstacles, a warning signal may be supplied, if desired.

In particular, the sensor image processing means are arranged to determine repeatedly an image of the observation area, in particular of an object therein. Although, in principle, determining a three-dimensional or not three-dimensional image only once is sufficient for performing the further control on the basis thereof, it is advantageous to perform this determination a plurality of times (successively). It is thus possible to take into account changing circumstances, and in particular movements of an animal or the like which is present.

Below, a sensor of the vehicle according to the invention will briefly be explained in further detail. The source of radiation emits electromagnetic radiation. Preferably light is used for this purpose, more preferably infrared radiation, more preferably near-infrared (NIR) radiation. The fact is that, for this purpose, suitable LEDs can be used which are very easy to drive by means of an electrically controllable supply current, and which are, in addition, very compact and efficient and have a long service life. However, it would also be possible to use other sources of radiation. The advantage of (near-)infrared radiation is that the radiation does not irritate animals which may be present.

The radiation is modulated according to a modulation frequency which is, of course, different from and much lower than the frequency of the electromagnetic radiation itself. The, for example, infrared light is in this case a carrier for the modulation signal. The modulation helps to determine the phase difference of emitted and reflected radiation. Preferably, the modulation is amplitude modulation.

By means of the emitted radiation, the distance is determined by measuring a phase shift of the modulation signal, by comparing the phase of reflected radiation with the phase of reference radiation. For the latter, the emitted radiation is mostly (almost) directly passed on to the receiver, anyhow with a known distance between the source and the receiver, so that the actual distance can easily be determined from the measured phase difference by applying

$$\text{Distance} = \tfrac{1}{2} \times \text{wavelength} \times (\text{phase difference}/2\,pi),$$

wherein the wavelength is that of the modulation signal. Please note that the above relation does not make allowance for unique determination of the distance which results from the fact that a phase difference, due to the periodicity, may be associated with a distance A, but also with A + n x (wavelength/2). For this reason, it may be sensible to select the wavelength of the amplitude modulation in such a manner that the distances which occur in practice are indeed uniquely determined.

Preferably, a wavelength of the amplitude modulation of the emitted light is between 1 mm and 20 m. Hereby distances may be uniquely determined up to a maximum distance of 0.5 mm to 10 m. In practice, often a sub-range of that distance is adhered to, for example between 0.5 mm and 5 m, due to loss of light and, partially as a result thereof, noisy and possibly inaccurate measurements. A modulation frequency of 300 MHz to 15 kHz is associated therewith, which modulation frequency can easily be realized in electric circuits for controlling LEDs. It should be noted that, if desired, it is also possible to select even smaller or larger wavelengths. It is advantageous, for example, to select the wavelength in dependence on the expected to be determined distance. For example, when looking for material to be displaced, that distance will often be between 10 cm and 100 cm, so that a preferred wavelength range will be between 20 cm and 200 cm, and consequently a preferred frequency range will be between 1.5 MHz and 150 kHz.

In a preferred embodiment, a wavelength is adjustable, in particular switchable between at least two values. This provides the possibility of performing, for example, first a rough measurement of the distance and/or the size, by means of the large modulation wavelength. For, this wavelength provides a reliable measurement over great distances, albeit with an inherent lower resolution. Here, it is assumed for the sake of simplicity that the resolution is determined by the accuracy of measuring the phase, which can be measured, for example, with an accuracy of y%. By first measuring at the large wavelength it is possible to measure the rough distance. Subsequently, it is possible to perform, at a smaller wavelength, a more precise measurement, wherein the unique determination is provided by the rough measurement.

For example, first a measurement is performed at a wavelength of 2 m. The accuracy of the phase determination is 5%. The measured phase difference amounts to (0.8 x 2pi) ± 5%. The measured distance then amounts to 0.80 ± 0.04 m. The next possibility would be 1.80 ± 0.04 m, which, however, can be excluded on the basis of the expected distance. Subsequently, measurement is performed at a wavelength of 0.5 m. The measured phase difference amounts to 0.12 x 2pi modulo 2pi, and again with ±5%. This means that the distance amounts to 0.12 x 0.25 modulo 0.25, so 0.03 modulo 0.25 m. As the distance should moreover amount to 0.80 ± 0.04, the distance should be equal to 0.78 m, but now with an accuracy of 0.01 m. In this manner the accuracy can be increased step by step, and the different modulation wavelengths can be selected on the basis of the accuracy of the previous step.

Advantageously, the sensor, at least a provided sensor control, is arranged to automatically adjust the wavelength or, of course, the frequency, to the determined distance. This makes it possible to determine the distance and/or the size more accurately in a next step.

It is also advantageous, for example, first to determine roughly the position/distance/size at a large wavelength, and subsequently to determine the speed from the change of position, which can indeed be uniquely determined from the change of the phase difference, and then preferably measured at a smaller wavelength.

In a preferred embodiment, the source of radiation emits radiation in a pulsed manner, preferably at a pulse frequency of between 1 Hz and 100 Hz. Here, the pulse length is preferably not more than ½ part, more preferably 1/n part of a pulse period. This provides radiationless pauses between the pulses, which may be used for other purposes, such as data transmission. For this purpose, the same source of radiation could then be used for example, but now with a different transmitter protocol; however, no measurement nevertheless being suggested or disturbed by the sensor. Additionally, it is possible to operate a different source of radiation and/or sensor in the pauses, in which case mutual interference neither takes place.

Preferably, the source of radiation has an adjustable light intensity and/or an adjustable angle of radiation. This provides the possibility of adapting the emitted radiation intensity or the emitted amount of radiation energy to the light conditions, which may result in energy saving. In the case of a short distance and a strong reflecting capacity, for example, less radiation is required than in the case of a great distance and a relatively strong absorbing capacity, of, for example, an amount of dung or the like. It is also possible to adapt the angle of radiation to the angle of view of the sensor, because the radiation angle of view need not be greater than that angle of view. It may be advantageous, for example, when navigating through a space, to select a great angle of radiation, such as for example between 80° and 180°, because the angle of view used in that case will often be great as well. On the other hand, when 'navigating' on a heap of material to be displaced or the like, the angle of radiation may also be selected smaller, such as for example between 30° and 60°. Of course, other angles of radiation are possible as well.

Alternatively or additionally, a sampling time of the sensor may be adjustable. For example, there is provided a mode in which a sampling time has been prolonged, for example has been doubled. Also in this manner it is possible to adapt the implement to more unfavourable conditions, because the total received amount of light increases. This may be advantageous, for example, at low reflection of the objects and the environment, or if there is, on the contrary, much scattered light. By way of example, a standard sampling time is 8 ms, whereas for difficult conditions the sampling time may be prolonged, to for example 16 ms.

In a particular embodiment, the receiver device, and advantageously also the source of radiation, is disposed rotatably and/or telescopically. This provides the advantage that for efficient navigation not the entire vehicle, but only the receiver device and possibly, also the source of radiation, has to be rotated. The vehicle then 'looks about' as it were. This is in particular advantageous if the angle of view, and possibly also the angle of radiation, is relatively small, in order to ensure in this manner a relatively high resolution. However, it is also possible, of course, to dispose the receiver device and the source of radiation rigidly, for the purpose of a greatest possible constructional simplicity. Additionally or alternatively, the receiver device, and advantageously also the source of radiation, may be telescopic. As a result thereof, the sensor may, if not required, e.g. be protected from influences from outside, while it may assume a favourable observation position, if this is desired.

In a special embodiment, the sensor comprises receivers which are positioned in such a manner that the sensor has an observation area with an angle of view of at least 180°, preferably of substantially 360°. In this case, it is possible to use either a single ultra wide-angle lens ('fisheye') to cast the image on the sensor, but it is also possible to use a sensor with a plurality of (image) surfaces, and associated lenses, or in other words a sensor with a plurality of sub-sensors, which comprise each a plurality of rows and columns of receivers. The advantage of this embodiment is that it is capable of overlooking in one go the complete field of view to move in one direction, and even of observing a complete around-image. It is obvious that this is particularly favourable for navigating and guiding.

In a particular embodiment, an angle of view of the observation area of the sensor is adjustable. The angle of view may then be selected, for example, in accordance with the observation object or area. It is advantageous, for example, when guiding to a heap of material to be displaced, to select the angle of view as a small one, with a corresponding higher resolution. It may also be advantageous to keep disturbing radiating objects, i.e. hot objects, such as incandescent lamps, away from the observation area by advantageously selecting the angle of view. For this purpose, it is possible, for example, to dispose an objective (lens) with variable focal distance ('zoom lens') in front of the sensor. It is also possible to select only a limited area of the receivers of the sensor. This is comparable with a digital zoom function.

Advantageously, at least a part of the sensor, in particular a source of radiation and/or the receiver device, is resiliently suspended from the frame. An advantage thereof is that, for example, an animal such as a cow will less soon get injured by the sensor which, of course, often projects to some extent, and thus forms a risk for legs and the like. On the other hand, the source of radiation and/or the receiver device are/is thus better protected from jolts caused by, for example, the same legs.

In a favourable embodiment, the navigation means are operatively connected to the sensor, in particular to the sensor image processing means, and more in particular the navigation means comprise the sensor. As already pointed out now and then in the foregoing, the present invention may not only be applied for, for example, detection of and guiding to material to be displaced, but also, for example, for guiding the vehicle as a whole to, for example, a recharging point, etc. It is then possible for the navigation means to receive information via the sensor, in order thus to be able to map out a route.

In particular, the sensor image processing means are arranged to recognize at least one of a heap of material to be displaced such as dung, an animal or a part thereof such as a leg of the animal. If such recognition means are incorporated in the sensor image processing means, or, of course, in a control device which is operatively connected thereto, the vehicle is very well capable of finding in an efficient manner its way to material to be displaced such as dung, or around an animal. In particular, this may be of importance for safety. For example, if the implement is arranged to recognize a calf, or other young animal, it is possible to prevent that a calf born from a cow which has calved prematurely is recognized as material to be displaced, which is, of course, dangerous and very undesirable. The vehicle is also capable of recognizing whether a box or other object to be cleaned Is free from animals. Needless to say that such a vehicle is capable of saving a lot of labour. Such image recognition means are, incidentally, known per se in the state of the art, and will not be explained here in further detail.

In particular, the image recognition means comprise previously stored information regarding position and/or orientation of one or more reference objects. Advantageously, the sensor image processing means are moreover arranged for orientation in the observation area on the basis of comparing the observed image with the stored information. Very efficient navigation is thus possible. Examples of reference objects are a door, a box, a beacon or the like. Advantageously the reference object comprises a marking, in particular a line or pattern on a floor of, for example, a shed, in which case the reference object has a high reflection coefficient for the emitted radiation. The line or the pattern may be used as an easily to be recognized orientation means, while the high reflection ensures a reliable signal. Such a reference object is advantageous if the vehicle often follows the same route, for example from a box to an unloading place for the material displaced.

The sensor is arranged to distinguish the plurality of sub-objects, i.e. to recognize and process a plurality of objects in one image, if the object in the observation area comprises a plurality of sub-objects. This may be distinguished, for example, because in the group of points from which radiation is reflected there is a discontinuously changing distance between at least a first group of points and a second group of points. It is thus possible to distinguish between a plurality of separate amounts of material to be displaced, or between material to be displaced and a part of an animal which, of course, can move. However, these techniques are known per se in the state of the art, so that this will not be set out here in further detail.

The sensor image processing means are arranged to determine a mutual distance between two of the plurality of sub-objects. This is, for example, advantageous when navigating, because the sensor or the navigation means are then able to determine whether the vehicle can pass through between the two sub-objects.

In a favourable embodiment, the sensor image processing means are arranged to determine repeatedly, from an image of the observation area, a position and/or a mutual distance to the distinguished subject, especially the material to be displaced. It is sufficient per se to determine only once the relevant position and/or the mutual distance to that material. However, it is advantageous to do this repeatedly, because the vehicle is thus able to anticipate, for example, unforeseen changes, such as an animal which comes into the path of the vehicle. Therefore, the vehicle according to this embodiment is capable of following an animal which may be present in a very efficient manner in the case of such movements.

In a special embodiment, the sensor image processing means are arranged to calculate the speed of the vehicle relative to the material to be displaced from a change of the position and/or the mutual distance, and in particular to minimize, advantageously on the basis of the calculated speed, the mutual distance between the vehicle and the material to be displaced, which will effect an even more efficient navigation. Alternatively, the speed and/or the position may also be adapted, for another purpose, such as avoiding.

The material displacing means advantageously comprise a material slide, so that the material can be slid from the floor. This is a very simple embodiment for displacing material, wherein it is possible to slide that material, for example, to a central collecting place.

The material slide is preferably made of flexible material, the flexibility being chosen in such a manner that, when displacing material, the material slide will at least substantially keep its shape, whereas, when colliding with a not recognized small obstacle which is rigidly fitted in or on the floor, the material slide will deform in such a manner that it is capable of passing along the obstacle.

More advantageously, the material displacing means comprise the material take-up means with a material storage, in particular material pick-up means and/or material sucking means. With the aid of such means displacement of unwanted material, by smearing and the like, is avoided in an efficient manner.

Such material pick-up means may comprise, for example, a gripper with a jaw portion, and advantageously with at least two jaw portions, as well as a storage container. In a similar manner, the material sucking means may comprise a suction pump, whether or not supported by, for example, rotating brushes or the like.

In embodiments, the vehicle further comprises a cleaning device for cleaning an environment, in particular a floor cleaning device for cleaning a shed floor. In addition to the displacement of material, this enhances the hygiene of the environment. The cleaning device comprises, for example, at least one rotating or reciprocatingly movable brush and/or a cleaning liquid applying device, if desired complemented by a sucking device for sucking material loosened by brushing and/or cleaning liquid. In one embodiment, the material sucking means and the sucking device are preferably combined.

A further advantage of the vehicle according to the invention is that it is capable of judging very well whether the material to be displaced has actually been displaced substantially completely. For this purpose the vehicle, at least the control device, is preferably arranged to form again an image of the observation area, after a material displacing action, and to judge whether the material to be displaced has disappeared from that image. For example, the control device is arranged to judge the image of the observation area as cleaned if in the depth image of that observation area no deviating height differences are recognized, or if the reflection capacity of the floor in the observation area does not deviate significantly from a predetermined average value.

In a special embodiment, the vehicle further comprises at least one of a connection for electric power supply, a connection for material supply, in particular dung, used washing and/or disinfecting liquid, and a connection for a liquid, in particular a washing or disinfecting liquid, wherein the sensor image processing means are arranged to couple the connection to a counter-connection for that connection, by recognizing the connection and the counter-connection and minimizing the mutual distance between the connection and the counter-connection. It is thus possible for such a vehicle to perform even more functions without the intervention of an operator. In this case, the coupling of the connection to the counter-connection may comprise steps which are comparable with the steps for locating and displacing the material to be displaced. This means: the vehicle comprises control means, connected to the sensor image processing means, which minimize, on the basis of the image of the connection and the counter-connection, the distance there between, in order thus to realize the coupling. In this case, the connection and/or the counter-connection are preferably self-searching.

The invention will now be explained in further detail with reference to the drawing, in which:

    Figure 1 is a diagrammatic side view of an unmanned vehicle according to the invention,
    Figure 2 is a diagrammatic view of a detail of a sensor of the unmanned vehicle according to the invention, and
    Figure 3 is a diagrammatic side view of another unmanned vehicle according to the invention.

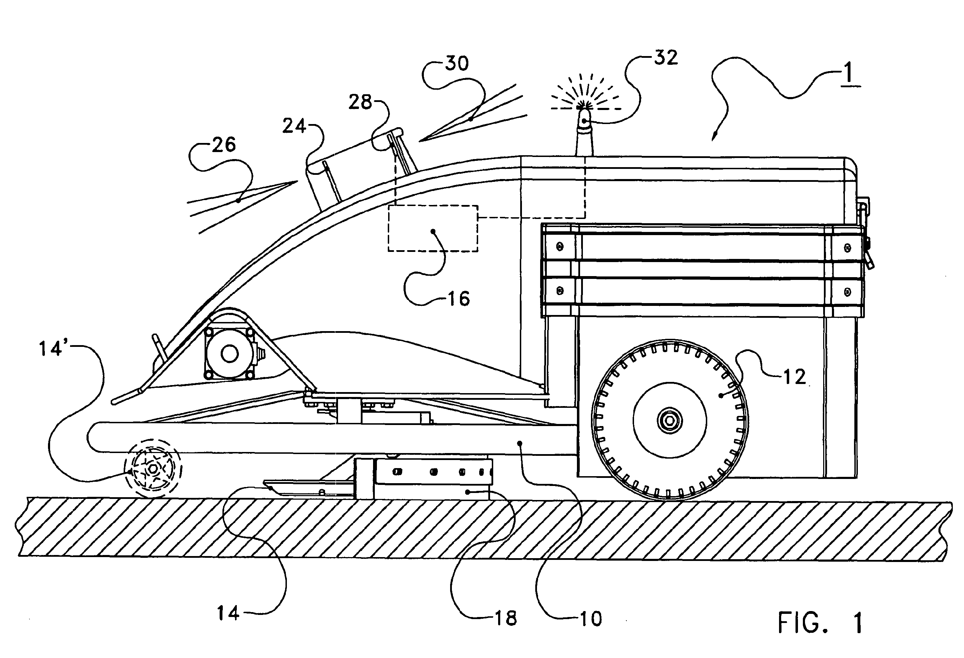

The unmanned vehicle shown in a diagrammatic side view in Figure 1 is generally denoted by the reference numeral 1. It comprises a frame 10 with rear wheels 12 and a sliding shoe 14 and/or optionally front wheels 14' which are indicated here by a dashed line, and with a control device 16. A dung slide 18 is disposed on the frame 10. There are further provided a first sensor 24 which emits a first light beam 26, as well as a second sensor which emits a second light beam 30, as well as a communication device 32.

The vehicle 1 is self-propelled, i.e. autonomously displaceable, by means of wheels 12 and/or 14' driven by a not shown drive. The control of the drive is preferably connected to the sensor image processing means and/or navigation means which are not separately depicted here. In fact, it is advantageous, for reasons of compactness, to combine both the sensor image processing means, the navigation means, robot control means (neither shown) and other control means, if any, in the control device 16 which comprises, for example, a CPU or comparable device.

In the very simple embodiment shown here, the dung slide 18 is made of flexible material. In this case, the flexibility is chosen in such a manner that, when displacing dung, the dung slide will at least substantially keep its shape, whereas, when colliding with a not recognized small obstacle which is rigidly fitted in or on the floor, the dung slide will deform so as to be capable of passing along the obstacle.

The first sensor 24, at least a not separately shown light source thereof, emits a first light beam 26. The first observation area of the first sensor 24 substantially corresponds to the solid angle in which the first radiation beam 26 is emitted, but may also be smaller. Likewise, a not separately shown light source in the second sensor 28 emits a second light beam 30, and the second observation area will roughly correspond to the solid angle in which the second light beam is emitted.

The first observation area, which is, incidentally, shown very diagrammatically in Figure 1, will be used in practice to navigate the vehicle 1. It will be possible to use the second observation area to be able to navigate in an area behind the vehicle 1.

The communication device 32 may be used for communication with an external PC, data storage, etc. For this purpose, there may be used radio signals, optical signals, and the like. For example, the image which is produced by means of the first and/or the second sensor may be sent to a control panel. The communication device may also serve to emit a warning signal, for example in the case of an operational failure. The signal may, for example, be visible and/or audible.

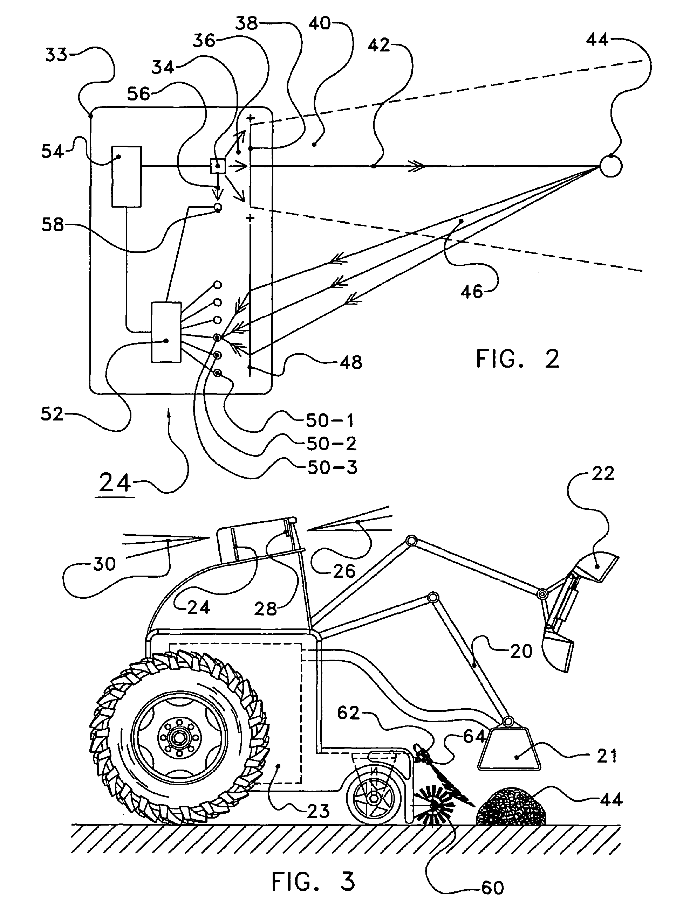

Figure 2 is a diagrammatic view of a sensor in operation.

The sensor 24 comprises a housing 33 with a light source 34 which emits light 36 which is formed by the exit optical device 38 into an outgoing beam 40. A first ray 42 thereof hits an object 44, such as a heap of dung, and is reflected as a reflected beam 46 which is displayed, via the entrance optical device 48, on a number of receivers 50-1, 50-2, 50-3, .... The signals from those receivers are processed by the sensor image processing device 52 which is connected to the sensor control 54. The sensor control 54 is also connected to the light source 34 which also emits a reference ray 56 to the reference receiver 58.

The housing 33 is, for example, a moisture-proof and dust-proof housing of shock-proof synthetic material or metal, which may be fastened on the milking implement in a resilient or otherwise shock-absorbing manner. The housing 33 comprises a front side. At the front side there is included an exit optical device 38 which forms light 36 from one or a plurality of light sources 34 into a desired outgoing beam 40. The outgoing beam need not be wider than the desired observation area, and preferably corresponds thereto. For this purpose, the exit optical device 38 may advantageously be an adjustable or even a zoom lens.

In this embodiment, the light source 34 comprises infrared light emitting diodes (IR-LEDs), but may also comprise other colours of LEDs, or a laser diode, etc. It should be noted that everywhere in this document the term 'light' is used, but that this may generally be read as 'electromagnetic radiation'. The light source 34 is connected to the sensor control 54 which, for example, applies an amplitude modulation signal over the control current of the IR-LEDs of light source 34, or otherwise effects a modulation of the light 36. An exemplary modulation frequency is, for example, 100 kHz, but this may be selected within very wide margins, and even be adjustable. Incidentally, there may also be provided a separate light source control, which may be connected itself to the sensor control 54, or a general control device 16. The light intensity of the light source 34 may be adjusted within associated limits, for example, by increasing the supplied power.

There may be provided a not shown power supply for the light source 34, for the sensor 24, and even for the vehicle 1 as a whole. It should be noted that neither the power supply, nor any of the sensor control 54, the sensor image processing device 52 to be described hereinafter, nor even the light source 34, need be provided in the sensor 24, but may, for example, also be provided elsewhere on the vehicle. The connections may be wired or wireless connections.

In a variant, the exit optical device 38 is provided at the inner side of the front side, the front side being made from a material which is transmissible for the emitted light. In this manner the exit optical device 38, and in general the interior of the sensor 24, is protected from external influences, while a flat front side of synthetic material can easily be cleaned.

In the outgoing beam 40, or in many cases in the observation area, there is an object 44, such as a heap of dung, a cow's leg or the like, which is irradiated by a first ray 42. The object 44 will partially reflect that first ray 42 in a reflected beam 46. Only a small part thereof is depicted, which part is formed into an image by the entrance optical device 48. The entrance optical device 48 may also effect an adaptation of the image to the desired observation area or vice versa, and may, for example, be designed for this purpose as an adjustable lens or even as a zoom lens.

In the housing 33 there is further included a place-sensitive receiver device, such as a CMOS or a CCD or the like. The receiver device comprises a matrix with a plurality of rows and columns of receivers 50-1, 50-2, 50-3, ..., in the form of photodiodes or other light-sensitive elements. In an exemplary embodiment, this is a matrix of 64X64 photodiodes, but resolutions of 176X144, 640X480, and other, smaller or larger, matrices are likewise possible. For the sake of clarity, only a very small number of receivers, and only in one single row, are depicted in Figure 2. Here, the reflected beam 46 is found to be displayed on the receiver 50-3, which will supply a signal. It will be obvious that, if, for example, the object 44 is larger, or the resolution of the sensor 24 is greater, there will be per object 44 a plurality of receivers 50-1, ..., which will supply a signal. This is also the case if a plurality of objects 44 are present in the observation area.

Consequently, in the depicted case, (only) the receiver 50-3 supplies a signal, from which a phase can be determined by means of known techniques, such as sampling at four points, at a known frequency. For this purpose, the sensor image processing device 52 may, for example, be equipped with suitable circuits. The sensor control 54 may also be equipped for this purpose.

This phase is compared with the phase of a reference ray 56 which is transmitted to and received by a reference receiver 58. It is not relevant whether the latter is located immediately next to the light source 34, as long as the optical path length, and consequently the acquired phase difference of the reference ray 56, between the light source 34 and the reference receiver 58, is known.

For each receiver 50-1, ..., there is determined, from the phase difference between the reference ray 56 and the beam reflected on the receiver, a distance with the known relation between wavelength and phase difference. This takes place in principle substantially parallel and simultaneously for each of the receivers 50-1, ... There is thus created a 2D collection of distances, from which a spatial image of the observed object 44 can be formed.

If necessary, the measurement is also performed at one or more other modulation wavelengths, in order to achieve a unique determination in distance, or an increased accuracy. If desired, it is also possible to repeat the measurement at one and the same modulation wavelength, for example to increase the reliability, to take changes in the observation area into account, such as movement, or even to determine a speed of an object 44 in that observation area, by measuring the change of a distance. For this purpose, the sensor control 54 may be arranged in a simple manner. A favourable repeat speed is, for example, at least 16 Hz, because it is thus possible to display movements suffciently flowing, at least for human beings. For higher accuracy of control, a higher repeat speed, such as 50 Hz or 100 Hz is even better. Other repeat speeds are possible as well, such as, for example, 1 Hz to 2 Hz, such as for unanimated objects, such as a heap of dung.

In a particular embodiment, short light pulses may be emitted by the light source 34, provided that each light pulse comprises at least one whole wave, preferably two or more waves, of the modulated signal. At the modulation frequencies occurring in practice, this can easily be realized.

In a favourable embodiment, the sensor comprises a Photonox Mixer Device (PMD), which incorporates in a suitable manner a matrix of light-sensitive and distance-sensitive sensors.

In practice, the vehicle with the sensor according to the invention will be able to recognize material to be displaced, for example because the observed image contains depth information which should not be present therein. For, the floor is assumed to be flat, or to extend at least in a known manner. If another depth is found in the image, i.e. another distance than an anticipated distance, this is an indication of the presence of often unwanted material. If desired, it is possible to make an additional judgement about this by means of additional image recognition techniques, for example by means of a spectral (colour) analysis which indicates whether the subject comprises dung, feed or the like. After positive recognition made in this manner it is possible for the vehicle 1 to displace the material 44 by means of the dung slide 18, for example to a collecting point.

Figure 3 is a diagrammatic side view of another unmanned vehicle according to the invention. Similar components will not be separately indicated again.

Here, the vehicle comprises material pick-up means and material sucking means provided with a storage and with a cleaning device. The material pick-up means comprise a gripper 22. The material sucking means comprise a suction nozzle 21 with a guide means 20. The storage is denoted by 23. The cleaning device comprises a rotatable brush 60 and a spray nozzle 62 which is capable of ejecting a jet of liquid 64.

Under the control of the sensor of the vehicle, the gripper is capable of picking up the heap 44 and depositing the latter, if desired, in the storage 23. Alternatively or additionally, under the guidance of the guide means 20 which itself is under the control of the sensor, the suction nozzle 21 is capable of sucking the heap 44.

Additionally, the cleaning device is capable of cleaning the floor, for example by brushing by means of the brush 60 and/or providing a jet of cleaning and/or disinfecting liquid 64. This liquid may be sucked, together with loosened material, by means of, for example, the suction nozzle 21. If desired, brushing may subsequently take place by means of the brush 60, and, if desired, sucking may take place again. Additionally, both during and after the cleaning process, the sensor may take an image of the area to be cleaned, in order to verify whether cleaning has been carried out properly.

It will be obvious that the invention is not limited to the preferred embodiments of the unmanned vehicle shown in the figures and described in the foregoing, but that numerous modifications are possible within the scope of the accompanying claims. For example, the dung slide as well as the sliding shoe may be designed linearly. Furthermore, the sliding shoe may be detachably fastened to the unmanned vehicle, so that it is possible to use the unmanned vehicle with and without sliding shoe.

**Claims**

1.  Unmanned vehicle for displacing material to be displaced, in particular dung, from the floor of a shed, comprising a frame (10), with disposed thereon
    material displacing means, in particular dung displacing means;
    propelling means (12, 14, 14'), and
    navigation means connected to the propelling means with a sensor (24, 28) for forming an image of an observation area, the sensor (24, 28) comprising:

    a source of radiation (34) for emitting modulated electromagnetic radiation (26, 30; 36, 40), in particular light,
    a receiver device for receiving electromagnetic radiation (46) reflected by an object (44) in the observation area,
    an optical device (48) for displaying the reflected electromagnetic radiation (46) on the receiver device, and
    sensor image processing means (52),
    **characterized in that** the receiver device comprises a matrix with a plurality of rows and a plurality of columns of receivers (50-1, 50-2, 50-3), and
    the sensor image processing means (52) are arranged to determine for each of the receivers a phase difference between the emitted electromagnetic radiation (40) and the reflected electromagnetic radiation (46) in order to calculate a distance from the receiver (50-1, 50-2, 50-3) to the object (44) and **in that** the sensor (24, 28) is arranged to distinguish the plurality of sub-objects if the object (44) in the observation area comprises a plurality of sub-objects and **in that** the sensor image processing means (52) are arranged to determine a mutual distance between two of the plurality of sub-objects.

2.  Vehicle according to claim 1, wherein the sensor image processing means (52) are arranged to form a three-dimensional image of the observation area, in particular of an object (44) therein, in particular to determine repeatedly an image of the observation area, in particular of an object (44) therein.

3.  Vehicle according to any one of the preceding claims, wherein the source of radiation (34) emits radiation (26, 30; 36, 40) in a pulsed manner, preferably at a pulse frequency between 1 Hz and 100 Hz.

4.  Vehicle according to any one of the preceding claims, wherein the source of radiation (34) has an adjustable light intensity and/or an adjustable angle of radiation, and/or wherein the sensor has an adjustable sampling time.

5.  Vehicle according to any one of the preceding claims, wherein the receiver device, and advantageously also the source of radiation (34), is disposed rotatably and/or telescopically.

6.  Vehicle according to any one of the preceding claims, wherein the sensor (24, 28) comprises receivers (50-1, 50-2, 50-3) which are positioned in such a manner that the sensor (24, 28) has an observation area with an angle of view of at least 180°, preferably of substantially 360°.

7.  Vehicle according to any one of the preceding claims, wherein an angle of view of the observation area of the sensor (24, 28) is adjustable.

8.  Vehicle according to any one of the preceding claims, wherein at least a part of the sensor (24, 28), in particular a source of radiation (34) and/or the receiver device, is resiliently suspended from the frame (10).

9.  Vehicle according to any one of the preceding claims, wherein the sensor image processing means (52) are arranged to recognize at least one of a heap of material (44) to be displaced and a leg of the dairy animal.

10. Vehicle according to any of the preceding claims, wherein the sensor image processing means (52) are arranged to calculate the speed of the vehicle relative to the material to be displaced from a change of the position and/or the mutual distance, and in particular to minimize, advantageously on the basis of the calculated speed, the mutual distance between the vehicle and the material to be displaced.

11. Vehicle according to any one of the preceding claims, wherein the material displacing means comprise material take-up means with a material storage (23), in particular material pick-up means (22) and/or material sucking means (20, 21).

12. Vehicle according to any one of the preceding claims, comprising a cleaning device (60, 62, 64) for cleaning an environment, in particular a floor cleaning device for cleaning a shed floor.

13. Vehicle according to any one of the preceding claims, further comprising at least one of a connection for electric power supply, a connection for material supply, in particular dung, used washing and/or disinfecting liquid, and a connection for a liquid, in particular a washing or disinfecting liquid, wherein the sensor image processing means (52) are arranged to couple the connection to a counter-connection for that connection, by recognizing the connection and the counter-connection and minimizing the mutual distance between the connection and the counter-connection.

**Patentansprüche**

1.  Unbemanntes Fahrzeug zum Verlagern von Material, insbesondere von Dung, welches vom Boden eines Stalls verlagert werden soll, umfassend einen Rahmen (10) mit darauf angeordneten
Material verlagernden Mitteln, insbesondere Dungverlagerungsmittel;
Antriebsmittel (12, 14, 14'), und
Navigationsmittel, welche mit den Antriebsmitteln verbunden sind, mit einem Sensor (24, 28) zum Erzeugen eines Bildes eines Beobachtungsbereichs, wobei der Sensor (24, 28) umfasst:

eine Strahlungsquelle (34) zum Ausstrahlen modulierter elektromagnetischer Strahlung (26, 30; 36, 40), insbesondere Licht,

eine Empfangsvorrichtung zum Empfangen elektromagnetischer Strahlung (46), welche durch ein Objekt (44) im Beobachtungsbereich reflektiert wird,

eine optische Vorrichtung (48) zum Anzeigen der reflektierten elektromagnetischen Strahlung (46) auf der Empfangsvorrichtung, und

Sensorbildverarbeitungsmittel (52),

**dadurch gekennzeichnet, dass** die Empfängervorrichtung eine Matrix mit einer Mehrzahl von Reihen und einer Mehrzahl von Spalten von Empfängern (50-1, 50-2, 50-3) umfasst und

die Sensorbildverarbeitungsmittel (52) angeordnet sind, um für jeden der Empfänger einen Phasenunterschied zwischen der ausgestrahlten elektromagnetischen Strahlung (40) und der reflektierten elektromagnetischen Strahlung (46) zu bestimmen, um einen Abstand vom Empfänger (50-1, 50-2, 50-3) zum Objekt (44) zu berechnen, und **dadurch** dass der Sensor (24, 28) angeordnet ist, um die Mehrzahl der Unterobjekte zu unterscheiden, wenn das Objekt (44) im Beobachtungsbereich eine Mehrzahl von Unterobjekten umfasst, und **dadurch** dass die Sensorbildverarbeitungsmittel (52) angeordnet sind, um einen gemeinsamen Abstand zwischen zwei aus der Mehrzahl der Unterobjekte zu bestimmen.

2. Fahrzeug nach Anspruch 1 ,
wobei die Sensorbildverarbeitungsmittel (52) so angeordnet sind, um ein dreidimensionales Bild des Beobachtungsbereichs aufzubauen, insbesondere eines Objekts (44) darin, insbesondere um ein Bild des Beobachtungsbereichs wiederholt zu bestimmen, insbesondere eines Objekts (44) darin.

3. Fahrzeug nach einem der vorhergehenden Ansprüche,
wobei die Strahlungsquelle (34) Strahlung (26, 30; 36, 40) in einer getakteten Weise emittiert, vorzugsweise mit einer Taktfrequenz zwischen 1 Hz und 100 Hz.

4. Fahrzeug nach einem der vorhergehenden Ansprüche,
wobei die Strahlungsquelle (34) eine einstellbare Lichtintensität und/oder einen einstellbaren Strahlungswinkel aufweist und/oder wobei der Sensor eine einstellbare Abtastzeit besitzt.

5. Fahrzeug nach einem der vorhergehenden Ansprüche,
wobei die Empfängervorrichtung und vorteilhafterweise auch die Strahlungsquelle (34) drehbar und/oder teleskopisch angeordnet sind (ist).

6. Fahrzeug nach einem der vorhergehenden Ansprüche,
wobei der Sensor (24, 28) Empfänger (50-1, 50-2, 50-3) umfasst, welche auf solch eine Weise positioniert sind, dass der Sensor (24, 28) einen Beobachtungsbereich mit einem Sichtwinkel von wenigstens 180°, vorzugsweise von im Wesentlichen 360°, aufweist.

7. Fahrzeug nach einem der vorhergehenden Ansprüche,
wobei ein Sichtwinkel des Beobachtungsbereichs des Sensors (24, 28) einstellbar ist.

8. Fahrzeug nach einem der vorhergehenden Ansprüche,
wobei wenigstens ein Teil des Sensors (24, 28), insbesondere eine Strahlungsquelle (34) und/oder die Empfängervorrichtung, elastisch am Rahmen (10) aufgehängt ist.

9. Fahrzeug nach einem der vorhergehenden Ansprüche,
wobei die Sensorbildverarbeitungsmittel (52) angeordnet sind, um wenigstens einen Materialhaufen (44), welcher verlagert werden soll, und ein Bein des Milchtieres zu erkennen.

10. Fahrzeug nach einem der vorhergehenden Ansprüche,
wobei die Sensorbildverarbeitungsmittel (52) angeordnet sind, um die Geschwindigkeit des Fahrzeugs relativ zum Material, welches verlagert werden soll, aus einer Veränderung der Position und/oder des gemeinsamen Abstands zu berechnen und insbesondere den gemeinsamen Abstand zwischen dem Fahrzeug und dem Material, welches verlagert werden soll, vorteilhafterweise auf der Grundlage der berechneten Geschwindigkeit zu minimieren.

11. Fahrzeug nach einem der vorhergehenden Ansprüche,
wobei die Materialverlagerungsmittel Material aufnehmende Mittel mit einem Materialspeicher (23), insbesondere Materialaufnahmemittel (22) und/oder Materialaufsaugmittel (20, 21), umfassen.

**12.** Fahrzeug nach einem der vorhergehenden Ansprüche,
umfassend eine Reinigungsvorrichtung (60, 62, 64) zum Reinigen einer Umgebung, insbesondere eine Bodenreinigungsvorrichtung zum Reinigen eines Stallbodens.

**13.** Fahrzeug nach einem der vorhergehenden Ansprüche,
des Weiteren umfassend wenigstens eine Verbindung zur Stromversorgung, eine Verbindung für Materialzufuhr, insbesondere Dung, gebrauchte Wasch- und/oder Desinfektionsflüssigkeit, und eine Verbindung für eine Flüssigkeit, insbesondere eine Wasch- oder Desinfektionsflüssigkeit, wobei die Sensorbildverarbeitungsmittel (52) angeordnet sind, um die Verbindung mit einem Verbindungsgegenstück für jene Verbindung durch Erkennen der Verbindung und des Verbindungsgegenstücks und durch Minimieren des gemeinsamen Abstands zwischen der Verbindung und dem Verbindungsgegenstück zu kuppeln.

## Revendications

**1.** Véhicule sans conducteur pour déplacer une matière à déplacer, en particulier du fumier, du sol d'une grange, comprenant un châssis (10) avec disposés sur celui-ci
des moyens de déplacement de matière, en particulier de moyens de déplacement de fumier ;
des moyens de mise en mouvement (12, 14, 14'), et des moyens de navigation connectés aux moyens de mise en mouvement avec un capteur (24, 28) pour former une image d'une zone d'observation, le capteur (24, 28) comprenant :

une source de rayonnement (34) pour émettre un rayonnement électromagnétique modulé (26, 30 ; 36, 40), en particulier de la lumière,
un dispositif récepteur pour recevoir un rayonnement électromagnétique (46) réfléchi par un objet (44) dans la zone d'observation,
un dispositif optique (48) pour visualiser le rayonnement électromagnétique réfléchi (46) sur le dispositif récepteur, et
des moyens de traitement d'images de capteur (52),
**caractérisé en ce que** le dispositif récepteur comprend une matrice avec une pluralité de lignes et une pluralité de colonnes de récepteurs (50-1, 50-2, 50-3), et
les moyens de traitement d'images de capteur (52) sont agencés pour déterminer, pour chacun des récepteurs, une différence de phase entre le rayonnement électromagnétique émis (40) et le rayonnement électromagnétique réfléchi (46) de manière à calculer une distance du récepteur (50-1, 50-2, 50-3) à l'objet (44) et **en ce que** le capteur (24, 28) est agencé pour distinguer la pluralité de sous-objets si l'objet (44) dans la zone d'observation comprend une pluralité de sous-objets et **en ce que** les moyens de traitement d'images de capteur (52) sont agencés pour déterminer une distance mutuelle entre deux des pluralités de sous-objets.

**2.** Véhicule selon la revendication 1, dans lequel les moyens de traitement d'images de capteur (52) sont agencés pour former une image tridimensionnelle de la zone d'observation, en particulier d'un objet (44) dans celle-ci, en particulier pour déterminer à plusieurs reprises une image de la zone d'observation, en particulier d'un objet (44) dans celle-ci.

**3.** Véhicule selon l'une quelconque des revendications précédentes, dans lequel la source de rayonnement (34) émet un rayonnement (26, 30 ; 36, 40) d'une manière pulsée, de préférence à une fréquence des impulsions entre 1 Hz et 100 Hz.

**4.** Véhicule selon l'une quelconque des revendications précédentes, dans lequel la source de rayonnement (34) a une intensité lumineuse réglable et/ou un angle de rayonnement réglable, et/ou dans lequel le capteur a un temps d'échantillonnage réglable.

**5.** Véhicule selon l'une quelconque des revendications précédentes, dans lequel le dispositif récepteur, et avantageusement également la source de rayonnement (34), est disposé de manière rotative et/ou télescopique.

**6.** Véhicule selon l'une quelconque des revendications précédentes, dans lequel le capteur (24, 28) comprend des récepteurs (50-1, 50-2, 50-3) qui sont positionnés de telle manière que le capteur (24, 28) ait une zone d'observation avec un angle de vision d'au moins 180°, de préférence sensiblement de 360°.

7. Véhicule selon l'une quelconque des revendications précédentes, dans lequel un angle de vision de la zone d'observation du capteur (24, 28) est réglable.

8. Véhicule selon l'une quelconque des revendications précédentes, dans lequel au moins une partie du capteur (24, 28), en particulier une source de rayonnement (34) et/ou le dispositif récepteur, est suspendu élastiquement au bâti (10).

9. Véhicule selon l'une quelconque des revendications précédentes, dans lequel les moyens de traitement d'images de capteur (52) sont agencés pour reconnaître au moins l'un parmi un tas de matière (44) à déplacer et une patte d'animal laitier.

10. Véhicule selon l'une quelconque des revendications précédentes, dans lequel les moyens de traitement d'images de capteur (52) sont agencés pour calculer la vitesse du véhicule par rapport à la matière à déplacer à partir d'une variation de la position et/ou de la distance mutuelle, et en particulier pour minimiser, avantageusement sur la base de la vitesse calculée, la distance mutuelle entre le véhicule et la matière à déplacer.

11. Véhicule selon l'une quelconque des revendications précédentes, dans lequel les moyens de déplacement de matière comprennent des moyens de prélèvement de matière avec un stockage de matière (23), en particulier des moyens de collecte de matière (22) et/ou des moyens d'aspiration de matière (20, 21).

12. Véhicule selon l'une quelconque des revendications précédentes, comprenant un moyen de nettoyage (60, 62, 64) pour nettoyer un environnement, en particulier un dispositif de nettoyage du sol pour nettoyer un sol de grange.

13. Véhicule selon l'une quelconque des revendications précédentes, comprenant en outre au moins l'une parmi une connexion pour l'alimentation électrique, une connexion pour l'alimentation de matière, en particulier du fumier, un liquide usé de lavage et/ou de désinfection, et une connexion pour un liquide, en particulier un liquide de lavage ou de désinfection, dans lequel les moyens de traitement d'images de capteur (52) sont agencés pour coupler la connexion à une connexion complémentaire pour cette connexion, en reconnaissant la connexion et la connexion complémentaire et en minimisant la distance mutuelle entre la connexion et la connexion complémentaire.

FIG. 1

EP 2 126 651 B1

FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- NL 1008612 C
- WO 70941 A
- NL 1024522
- EP 1762862 A